(19) Europäisches Patentamt
European Patent Office
Office européen des brevets

(11) **EP 1 415 953 B1**

(12) **FASCICULE DE BREVET EUROPEEN**

(45) Date de publication et mention
de la délivrance du brevet:
**25.07.2007 Bulletin 2007/30**

(51) Int Cl.:
***C01B 21/09*** *(2006.01)*

(21) Numéro de dépôt: **03292567.9**

(22) Date de dépôt: **15.10.2003**

(54) **Procédé de synthèse de la monochloramine**

Verfahren zur Herstellung von Monochloramin

Process for the preparation of monochloramine

(84) Etats contractants désignés:
**AT BE BG CH CY CZ DE DK EE ES FI FR GB GR HU IE IT LI LU MC NL PT RO SE SI SK TR**

(30) Priorité: **04.11.2002 FR 0213765**

(43) Date de publication de la demande:
**06.05.2004 Bulletin 2004/19**

(73) Titulaires:
• **ISOCHEM**
**75004 Paris (FR)**
• **CENTRE NATIONAL DE**
**LA RECHERCHE SCIENTIFIQUE (CNRS)**
**75016 Paris (FR)**
• **UNIVERSITE CLAUDE BERNARD - LYON 1**
**69622 Villeurbanne Cédex (FR)**

(72) Inventeurs:
• **Delalu, Henri**
**69002 Lyon (FR)**
• **Duriche, Cécile**
**69006 Lyon (FR)**
• **Berthet, Jacques**
**69003 Lyon (FR)**

• **Le Gars, Pierre**
**31400 Toulouse (FR)**

(74) Mandataire: **Ahner, Francis et al**
**Cabinet Régimbeau**
**20, rue de Chazelles**
**75847 Paris cedex 17 (FR)**

(56) Documents cités:
**US-A- 3 254 952          US-B1- 6 222 071**

• **DATABASE WPI Section Ch, Week 198828 Derwent Publications Ltd., London, GB; Class E35, AN 1988-196157 XP002244861 & RO 93 338 A (COMB CHIM VICTORIA), 30 janvier 1988 (1988-01-30)**
• **DATABASE CA [en ligne] CHEMICAL ABSTRACTS SERVICE, COLUMBUS, OHIO, US; DELALU, H. ET AL: "Synthesis of enriched solutions of chloramine starting from hypochlorite at high chlorometric degree" retrieved from STN Database accession no. 135: 290834 CA XP002244860 & CHEMICAL ENGINEERING JOURNAL (AMSTERDAM, NETHERLANDS) (2001), 83(3), 219-224,**

## Description

La présente invention concerne un procédé de synthèse de la monochloramine. Plus précisément, la présente invention concerne un procédé de synthèse de la monochloramine par réaction du chlorure d'ammonium avec de l'hypochlorite de sodium.

Une des principales applications de la monochloramine est la synthèse d'hydrazines substituées ou non, composés utilisés dans l'industrie spatiale pour la fabrication de propergols, en agrochimie pour la synthèse de régulateurs de croissance ou de produits phytosanitaires ou encore dans l'industrie pharmaceutique.

L'homme du métier connaît déjà un procédé de synthèse de la monochloramine, par réaction de l'hypochlorite de sodium avec de l'ammoniac, il s'agit de la première étape du procédé Raschig :

$$NH_3 + NaOCl \rightarrow NH_2Cl + NaOH$$

Dans une telle synthèse l'ammoniac est toujours utilisé en excès par rapport à l'hypochlorite de sodium. Il est aussi connu d'utiliser une solution mixte d'ammoniac et de chlorure d'ammonium, le rapport entre la concentration en ammoniac total (ammoniac et chlorure d'ammonium) et la concentration d'hypochlorite de sodium étant de l'ordre de 3. L'excès d'ammoniac par rapport à l'hypochlorite de sodium est une condition nécessaire pour obtenir de la chloramine stable, avec un rendement élevé. Or, l'inconvénient de telles conditions de réaction est la présence d'hydrazine comme sous-produit de réaction. En effet, l'ammoniac étant utilisé en excès par rapport à l'hypochlorite de sodium, il réagit avec la chloramine ainsi synthétisée pour former de l'hydrazine :

$$NH_3 + NH_2Cl + OH^- \rightarrow N_2H_4 + Cl^- + H_2O$$

Le procédé Raschig étant utilisé pour la synthèse de la monométhylhydrazine, la présence d'hydrazine dans le milieu réactionnel est un inconvénient majeur. Il faut ensuite éliminer l'hydrazine, soit par distillation, soit par voie catalytique, ce qui augmente considérablement le coût du procédé.

L'homme du métier est donc toujours à la recherche d'un procédé de synthèse de monochloramine, dans des conditions stoechiométriques, c'est-à-dire sans excès d'ammoniac, afin d'éviter toute réaction parallèle entre la monochloramine formée et l'ammoniac résiduel dans le milieu réactionnel.

La présente invention a pour objet un tel procédé.

La présente invention concerne un procédé de synthèse de monochloramine par réaction d'une solution de chlorure d'ammonium avec une solution d'hypochlorite de sodium, caractérisé en ce que la solution d'hypochlorite de sodium est préalablement alcalinisée par une base inorganique et en ce que le rapport entre la concentration de chlorure d'ammonium dans le milieu réactionnel et la concentration d'hypochlorite de sodium dans le milieu réactionnel soit compris entre 1 et 1,5. Le rapport entre la concentration de chlorure d'ammonium dans le milieu réactionnel et la concentration d'hypochlorite de sodium dans le milieu réactionnel est préférentiellement égal à 1,1.

La réaction est effectuée « volume à volume », cela signifie que le volume de la solution d'hypochlorite de sodium utilisé et le volume de la solution de chlorure d'ammonium utilisé sont identiques.

Ce procédé permet de synthétiser la monochloramine avec un rendement élevé, supérieur à 95%, dans des conditions « quasi-stoechiométriques ». On appelle conditions « quasi-stoechiométriques » des conditions de réaction dans lesquelles le chlorure d'ammonium est utilisé en léger excès par rapport à l'hypochlorite de sodium. Ainsi, toute réaction compétitive entre la monochloramine formée et l'ammoniac restant dans le milieu réactionnel est évitée. Ce procédé permet d'obtenir une solution finale concentrée en monochloramine et contenant très peu d'ammoniac. Ainsi, le taux d'ammoniac résiduel est inférieur d'environ 95% par rapport aux procédés de l'état de la technique.

De façon surprenante, il a été trouvé que le fait d'utiliser une solution d'hypochlorite de sodium préalablement alcalinisée par une base inorganique permettait de synthétiser la chloramine dans des conditions quasi-stoechiométriques, avec un très bon rendement, supérieur à 95%, la chloramine ainsi synthétisée étant stable. En effet, des essais comparatifs montrent qu'une simple transposition du procédé classique, en opérant dans des conditions stoechiométriques, ne permettait de synthétiser la chloramine qu'avec un faible rendement, de l'ordre de 50%, la chloramine formée dans de telles conditions de réaction étant instable.

La base inorganique est de préférence choisie dans le groupe constitué par l'hydroxyde de sodium, l'hydroxyde de potassium et l'hydroxyde de lithium. De façon particulièrement préférée, la base inorganique est l'hydroxyde de sodium.

La base inorganique utilisée pour alcaliniser la solution d'hypochlorite de sodium est utilisée soit sous forme solide, soit sous forme de solution aqueuse. De façon particulièrement préférée, la base inorganique est utilisée sous forme d'une solution aqueuse. La concentration de la base inorganique dans la solution d'hypochlorite de sodium est généralement comprise entre 0,05 mol/l et 1 mol/l, de préférence entre 0,1 mol/l et 0,5 mol/l. Le pH du milieu réactionnel est ainsi compris entre 8 et 11.

La solution d'hypochlorite de sodium utilisée est une solution d'eau de Javel ayant un degré chlorométrique compris entre 45° (ce qui correspond à une concentration d'environ 2 mol/l en hypochlorite de sodium) et 70° (ce qui correspond à une concentration d'environ 3 mol/l en hypochlorite de sodium). La concentration de l'hypochlorite de sodium dans le milieu réactionnel est comprise entre 0,5 mol/l et 1,5 mol/l.

La réaction est généralement effectuée à une température comprise entre -15°C et 0°C.

On donne maintenant un mode de réalisation préférée de l'invention. La réaction est effectuée dans un réacteur à double paroi, permettant ainsi la circulation d'un fluide thermostatique entre les deux parois. La température au sein du réacteur est comprise entre -15°C et 0°C. Une solution de chlorure d'ammonium est introduite dans ce réacteur. Une solution d'hypochlorite de sodium alcalinisée est préparée. Pour cela, on mélange au préalable une base inorganique, de préférence sous forme d'une solution aqueuse et une solution d'hypochlorite de sodium. La concentration de la base inorganique dans la solution d'hypochlorite de sodium est généralement comprise entre 0,05 mol/l et 1 mol/l. La solution d'hypochlorite de sodium alcalinisée est refroidie à une température comprise entre -20°C et -5°C, et est introduite goutte à goutte dans le réacteur, à l'aide d'une ampoule de coulée. Le volume de solution d'hypochlorite de sodium introduit est identique au volume de la solution de chlorure d'ammonium présent dans le réacteur. Les concentrations des deux solutions sont choisies de telle sorte que le rapport entre la concentration de chlorure d'ammonium dans le milieu réactionnel et la concentration d'hypochlorite de sodium dans le milieu réactionnel soit compris entre 1 et 1,5, de préférence proche de 1,1. La concentration de la solution d'hypochlorite de sodium dans le milieu réactionnel est généralement comprise entre 0,5 mol/l et 1,5 mol/l. L'addition de la solution d'hypochlorite de sodium dure environ 15 minutes. La température du milieu réactionnel est comprise entre -15°C et 0°C, de préférence proche de -8°C. En fin de réaction, une solution de chloramine est obtenue avec un très bon rendement, de l'ordre de 99%. Le milieu réactionnel contient très peu d'ammoniac résiduel, sa concentration est inférieure à 0,2 mol/l.

Les exemples qui suivent illustrent, à titre non limitatif des possibilités de mise en oeuvre de l'invention.

Exemple 1 : synthèse de la chloramine à partir d'une solution d'hypochlorite de sodium 2,07 mol/l et d'une solution de chlorure d'ammonium 2,28 mol/l.

La réaction est effectuée dans un réacteur de 100 ml, à double paroi en verre borosilicaté. La température au sein du réacteur est maintenue à -11°C par circulation d'un fluide thermostatique. On introduit dans ce réacteur 20 ml d'une solution de chlorure d'ammonium, 2,28 mol/l. On prépare une solution d'hypochlorite de sodium 2,07 mol/l dont la concentration en hydroxyde de sodium est de 0,12 mol/l. On introduit ensuite, dans ce même réacteur, goutte à goutte, 20 ml de la solution d'hypochlorite de sodium préalablement préparée et refroidie à -15°C. La concentration en chlorure d'ammonium dans le milieu réactionnel est donc de 1,14 mol/l et la concentration en hypochlorite de sodium dans le milieu réactionnel est donc de 1,035 mol/l. Le rapport des concentrations de chlorure d'ammonium et d'hypochlorite de sodium ([$NH_4Cl$]/[$NaOCl$]) est égal à 1,1. L'addition dure 15 minutes et est effectuée à l'aide d'une ampoule de coulée. La température du milieu réactionnel se fixe à -7°C sous agitation.

On obtient en fin de réaction une solution de chloramine 1,03 mol/l, ce qui correspond à un rendement de 99,5%. On mesure la concentration en ammoniac total résiduel, elle est de 0,105 mol/l.

Exemple 2 : synthèse de la chloramine à partir d'une solution d'hypochlorite de sodium 3 mol/l et d'une solution de chlorure d'ammonium 3,34 mol/l.

La réaction est effectuée dans un réacteur de 100 ml, à double paroi en verre borosilicaté. La température au sein du réacteur est maintenue à -12°C par circulation d'un fluide thermostatique. On introduit dans ce réacteur 20 ml d'une solution de chlorure d'ammonium, 3,34 mol/l. On prépare une solution d'hypochlorite de sodium 3 mol/l dont la concentration en hydroxyde de sodium est de 0,3 mol/l. On introduit ensuite, dans ce même réacteur, goutte à goutte, 20ml de la solution d'hypochlorite de sodium préalablement préparée et refroidie à -5°C. La concentration en chlorure d'ammonium dans le milieu réactionnel est donc de 1,17 mol/l et la concentration en hypochlorite de sodium dans le milieu réactionnel est donc de 1,5 mol/l. Le rapport des concentrations de chlorure d'ammonium et d'hypochlorite de sodium ([$NH_4Cl$]/[$NaOCl$]) est égal à 1,1. L'addition dure 15 minutes et est effectuée à l'aide d'une ampoule de coulée. La température du milieu réactionnel se fixe à -8°C sous agitation.

On obtient en fin de réaction une solution de chloramine 1,43 mol/l, ce qui correspond à un rendement de 95,3%. On mesure la concentration en ammoniac total résiduel, elle est de 0,17 mol/l.

Les exemples 3 et 4 qui suivent ne font pas partie de l'invention. Ils ont été réalisés dans le but de montrer d'une part l'amélioration apportée par le procédé objet de l'invention par rapport à l'état de la technique, et d'autre part, que le procédé objet de l'invention n'est pas une simple transposition du procédé déjà connu de l'homme du métier.

Exemple 3 : synthèse de la chloramine, selon la 1ère étape du procédé Raschig, à partir d'une solution d'hypochlorite de sodium 2,01 mol/l et d'une solution mixte d'ammoniac 3,60 mol/l et de chlorure d'ammonium 2,38 mol/l.

La réaction est effectuée dans un réacteur de 100 ml, à double paroi en verre borosilicaté. La température au sein du réacteur est maintenue à -11°C par circulation d'un fluide thermostatique. On introduit dans ce réacteur 20 ml d'une solution mixte d'ammoniac 3,6 mol/l et de chlorure d'ammonium 2,38 mol/l. On introduit ensuite, dans ce même réacteur, goutte à goutte, 20ml d'une solution d'hypochlorite de sodium, 2,01 mol/l, préalablement refroidie à -15°C. Le rapport des concentrations en ammoniac total et en hypochlorite de sodium (([NH$_4$Cl] + [NH$_3$])/[NaOCl]) est égal à 2,9. L'addition dure 15 minutes et est effectuée à l'aide d'une ampoule de coulée. La température du milieu réactionnel se fixe à -7°C sous agitation.
On obtient en fin de réaction une solution de chloramine 1,00 mol/l, ce qui correspond à un rendement de 99,9%. On mesure la concentration en ammoniac total résiduel, elle est de 1,99 mol/l, ce qui est nettement supérieur à la concentration en ammoniac total résiduel obtenu selon le procédé objet de l'invention.

Exemple 4 : synthèse de la chloramine, selon la 1ère étape du procédé Raschig, en conditions stoechiométriques, c'est-à-dire à partir d'une solution d'hypochlorite de sodium 2,17 mol/l et d'une solution d'ammoniac 2,38 mol/l.

La réaction est effectuée dans un réacteur de 100 ml, à double paroi en verre borosilicaté. La température au sein du réacteur est maintenue à -11°C par circulation d'un fluide thermostatique. On introduit dans ce réacteur 20 ml d'une solution d'ammoniac 2,38 mol/l. On introduit ensuite, dans ce même réacteur, goutte à goutte, 20ml d'une solution d'hypochlorite de sodium, 2,17 mol/l, préalablement refroidie à -15°C. Le rapport des concentrations en ammoniac et en hypochlorite de sodium ([NH$_3$])/[NaOCl]) est égal à 1,1. L'addition dure 15 minutes et est effectuée à l'aide d'une ampoule de coulée. La température du milieu réactionnel se fixe à -5°C sous agitation.
On obtient en fin de réaction une solution de chloramine 0,59 mol/l, ce qui correspond à un rendement de 54,3%, rendement nettement inférieur à celui obtenu selon le procédé objet de l'invention.

**Revendications**

1. Procédé de synthèse de la monochloramine par réaction d'une solution de chlorure d'ammonium avec une solution d'hypochlorite de sodium, **caractérisé en ce que** la solution d'hypochlorite de sodium est préalablement alcalinisée par une base inorganique et **en ce que** le rapport entre la concentration de chlorure d'ammonium dans le milieu réactionnel et la concentration d'hypochlorite de sodium dans le milieu réactionnel soit compris entre 1 et 1,5. '

2. Procédé selon la revendication 1, **caractérisé en ce que** le rapport entre la concentration de chlorure d'ammonium dans le milieu réactionnel et la concentration d'hypochlorite de sodium dans le milieu réactionnel est 1,1.

3. Procédé selon la revendication 1, **caractérisé en ce que** la base inorganique est choisie dans le groupe constitué par l'hydroxyde de sodium, l'hydroxyde de potassium et l'hydroxyde de lithium.

4. Procédé selon la revendication 3, **caractérisé en ce que** la base inorganique est l'hydroxyde de sodium.

5. Procédé selon la revendication 1, **caractérisé en ce que** la base inorganique est utilisée sous forme d'une solution aqueuse.

6. Procédé selon la revendication 1, **caractérisé en ce que** la concentration de la base inorganique dans la solution d'hypochlorite de sodium est comprise entre 0,05 mol/l et 1 mol/l.

7. Procédé selon la revendication 6, **caractérisé en ce que** la concentration de base inorganique dans la solution d'hypochlorite de sodium est comprise entre 0,1 et 0,5 mol/l.

8. Procédé selon la revendication 1, **caractérisé en ce que** le volume de la solution d'hypochlorite de sodium utilisé et le volume de la solution de chlorure d'ammonium utilisé sont identiques.

9. Procédé selon la revendication 1, **caractérisé en ce que** la réaction est effectuée à une température comprise entre -15°C et 0°C.

10. Procédé selon la revendication 1, **caractérisé en ce que** la concentration de l'hypochlorite de sodium dans le milieu réactionnel est comprise entre 0,5 mol/l et 1,5 mol/1.

**Claims**

1. A process for the synthesis of monochloramine by reaction of an ammonium chloride solution with a sodium hypochlorite solution, **characterized in that** the sodium hypochlorite solution is basified beforehand with an inorganic base and **in that** the ratio of the concentration of ammonium chloride in the reaction medium to the concentration of sodium hypochlorite in the reaction medium is between 1 and 1.5.

2. The process according to claim 1, **characterized in that** the ratio of the concentration of ammonium chloride in the reaction medium to the concentration of sodium hypochlorite in the reaction medium is 1.1.

3. The process according to claim 1, **characterized in that** the inorganic base is selected from the group consisting of sodium hydroxide, potassium hydroxide and lithium hydroxide.

4. The process according to claim 3, **characterized in that** the inorganic base is sodium hydroxide.

5. The process according to claim 1, **characterized in that** the inorganic base is used in the form of an aqueous solution.

6. The process according to claim 1, **characterized in that** the concentration of the inorganic base in the sodium hypochlorite solution is between 0.05 mol/l and 1 mol/l.

7. The process according to claim 6, **characterized in that** the concentration of inorganic base in the sodium hypochlorite solution is between 0.1 and 0.5 mol/l.

8. The process according to claim 1, **characterized in that** the volume of the sodium hypochlorite solution used and the volume of the ammonium chloride solution used are identical.

9. The process according to claim 1, **characterized in that** the reaction is carried out at a temperature of between -15°C and 0°C.

10. The process according to claim 1, **characterized in that** the concentration of sodium hypochlorite in the reaction medium is between 0.5 mol/l and 1.5 mol/l .

**Patentansprüche**

1. Verfahren zur Herstellung von Monochloramin durch die Reaktion einer Ammoniumchloridlösung mit einer Natriumhypochloritlösung, **dadurch gekennzeichnet, dass** die Natriumhypochloritlösung vorab durch eine anorganische Base alkalisch gemacht wird und dass das Verhältnis der Ammoniumchlorid-Konzentration in dem Reaktionsmedium zur Natriumhypochlorit-Konzentration in dem Reaktionsmedium 1 bis 1,5 beträgt.

2. Verfahren gemäß Anspruch 1, **dadurch gekennzeichnet, dass** das Verhältnis der Ammoniumchorid-Konzentration in dem Reaktionsmedium zur Natriumhypochlorit-Konzentration in dem Reaktionsmedium 1,1 beträgt.

3. Verfahren gemäß Anspruch 1, **dadurch gekennzeichnet, dass** die anorganische Base ausgewählt ist aus Natriumhydroxid, Kaliumhydroxid und Lithiumhydroxid.

4. Verfahren gemäß Anspruch 3, **dadurch gekennzeichnet, dass** die anorganische Base Natriumhydroxid ist.

5. Verfahren gemäß Anspruch 1, **dadurch gekennzeichnet, dass** die anorganische Base in Form einer wässrigen Lösung verwendet wird.

6. Verfahren gemäß Anspruch 1, **dadurch gekennzeichnet, dass** die Konzentration der anorganischen Base in der Natriumhypochloritlösung 0,05 mol/l bis 1 mol/l beträgt.

7. Verfahren gemäß Anspruch 6, **dadurch gekennzeichnet, dass** die Konzentration der anorganischen Base in der Natriumhypochloritlösung 0,1 mol/l bis 0,5 mol/l beträgt.

8. Verfahren gemäß Anspruch 1, **dadurch gekennzeichnet, dass** das Volumen der verwendeten Natriumhypochloritlösung und das Volumen der verwendeten Ammoniumchloridlösung gleich sind.

9. Verfahren gemäß Anspruch 1, **dadurch gekennzeichnet, dass** die Reaktion bei einer Temperatur von -15°C bis 0°C durchgeführt wird.

10. Verfahren gemäß Anspruch 1, **dadurch gekennzeichnet, dass** die Natriumhypochlorit-Konzentration in dem Reaktionsmedium 0,5 mol/l bis 1,5 mol/l beträgt.